# EUROPEAN PATENT APPLICATION

(11) **EP 1 669 485 A2**
(43) Date of publication of application: **14.06.2006**
(21) Application number: 04772818.3
(22) Date of filing: 30.08.2004
(51) Int. Cl.: D04H 1/00

(54) **GLASS WOOL SHAPED ARTICLE AND METHOD OF FORMATION THEREOF**

(30) Priority: 03.09.2003 JP 2003311355
(71) Applicant: Paramount Glass Manufacturing Co., Ltd., Koriyama-shim, Fukushima 963-8017 (JP)
(72) Inventor: OTAKI, Keiji c/o Paramount Glass, Koriyama-shi, Fukushima 963-8017 (JP); SHIRAIWA, Masaki c/o Paramount Glass, Koriyama-shi, Fukushima 963-8017 (JP); WATANABE, Tomohiro c/o Paramount Glass, Koriyama-shi, Fukushima 963-8017 (JP); WATANABE, Takayasu c/o Paramount Glass, Koriyama-shi, Fukushima 963-8017 (JP); SOEJIMA, Hisakazu c/o Paramount Glass, Koriyama-shi, Fukushima 963-8017 (JP)
(74) Representative: Crouch, David John
(86) International application number: PCT/JP2004/012869
(87) International publication number: WO 2005/024107

(57) **Abstract**

A glass wool molded product (4) comprising a layered body (2) of glass wools (1) is **characterized in that** the layered body (2) does not contain any binder, the layered body (2) is needle punched in a direction (Y) orthogonal to a longitudinal direction (X) of the wools thereof, that the layered body (2) is integrally formed, the wools have an average diameter of 3 to 7 µm, and each of the wools has a length between 10 and 200mm. Preferably, the molded product has a multilayer structure in a direction orthogonal to the longitudinal direction of the wools, and the average diameter of the fibers or wools of a first layer differ from each other. Preferably, a density of the second layer that of the second layer differ from each other.

## Description

### FIELD OF THE INVENTION

The present invention relates to a glass wool molded product used as thermal insulator, which product is formed by needle punching a layered body of short glass fibers (glass wool). Also, the present invention relates to an improved method of molding the product.

### RELATED ARTS

Glass wool molded products to be used as thermal insulators are generally prepared by producing fine and short glass fibers (glass wool) from molten glass by means of a centrifugal method or a blowing method, collecting them to form the product having a predetermined thickness, using phenol resin or melamine resin as binder, and drying them by heat. However, organic binders can easily be gasified to a large extent at high temperature in vacuum. Additionally, molded product is poorly capable of retaining their shapes, and not sufficiently thermally insulating and heat resistant. Still additionally, broken fibers are produced, and can give rise to a problem of adversely stimulating human bodies.

In view of the above identified problems of glass wool molded products formed by using short glass fibers (glass wools), there have been proposed thermal insulators of long glass fibers (continuous glass fibers) formed integrally by needle punching without using any binder (Japanese Utility Model Publication No. Hei 6-38674, Japanese Patent Laid-Open No. Hei 7-96563). However, with the techniques disclosed in the above patent documents, long glass fibers can be easily broken by the needle punching. Since fibers are broken, the binding force of fibers due to interlace is reduced. Additionally, broken fibers can easily fly out, and become scattered during the process to raise the consumption rate of glass fibers and adversely stimulate human bodies. Furthermore, since the interlace of fibers is reduced, the density of the product increases, to by turn raise the thermal conductivity and to reduce the heat resistance of the product. Since the binding force of fibers is reduced, the tensile strength of the product is lowered to make the product less handleable when manufacturing, transporting and otherwise using. Moreover, since the binding force of fibers is reduced, the smoothness and the hardness of the surface of the glass wool molded product become insufficient. Finally, since fibers are broken, the cost of manufacturing the product increases.

### SUMMARY OF THE INVENTION

In view of the above identified problems of the prior art, it is the object of the present invention to provide a glass wool molding that shows satisfactory characteristics in use in terms of compression strength, tensile strength, thermal insulation, compression resiliency, surface hardness, surface smoothness and so on, decreases a dust of glass powder, and does not generate gas from the binder, although it is formed integrally by needle punching. Also, a method of forming the same is provided.

In an aspect of the present invention, the above object is achieved by providing a glass wool molded product comprising a layered body of glass wool, characterized in that
the layered body does not contain any binder,
the layered body is needle punched in a direction orthogonal to a longitudinal direction of the wools thereof, so that the layered body is integrally formed,
the wools have an average diameter of 3 to 7 µm, and
each of the wools has a length between 10 and 200mm.

Preferably, the molded product has a multilayer structure in the direction orthogonal to the longitudinal direction of the wools, and the average diameter of the wools of a first layer and that of the wools of a second layer differ from each other.

Preferably, the molded product has a multilayer structure in the direction orthogonal to the longitudinal direction of the wools, and a density of a first layer and that of a second layer differ from each other.

Preferably, the molded product is a hexahedron, and, a hardened layer of an inorganic type adhesive agent is formed on at least one of surfaces of the molded product.

Preferably, a density of the molded product is between 70kg/m³ and 110kg/m³.

The above described molded product can be formed by supplying a layered body of glass wools having an average diameter of 3 to 7 µm and a wool length between 10 and 200mm, said layered body including no binder, and needle punching the layered body in a direction orthogonal to a longitudinal direction of the wools, to molding the molded product. When the molded product has a hardened layer of adhesive agent, such molded product is formed by subsequently applying an inorganic type adhesive agent to at least one of surfaces of the molded product, and heat-setting the applied inorganic type adhesive agent.

According to the present invention, the average diameter of the glass wools (short glass fibers) is not less than 3 µm. When glass fibers or glass wools having a small diameter are formed from molten glass, the obtained glass fibers tend to be short. Since the average diameter of the glass fibers or wools is 3 µm or more, the fibers or wools are not too short, so that the fibers or wools can be sufficiently interlaced one another by needle punching, so as to obtain the molded product showing a sufficiently high degree of strerigth in use. Additionally, since the fibers or wools are not too short, it can be prevented from the fibers or wools from being directed to the reciprocating direction of the needle in the needle punching. Thus, it is possible to obtain the molded product showing a low thermal conductivity.

According to the present invention, the average diameter is 7 µm or less. Therefore, the glass fibers or wools are highly resilient, and prevented from being broken during needle punching. Broken fibers decrease the interlace of fibers. Such situation can be prevented according to the present invention, so as to provide the molded product having a sufficient operating strength. Additionally, it is possible to prevent a dust of glass from arising due to broken glass fibers. Since the interlace is prevent from being decreased, the molded product shows a low thermal conductivity.

Additionally, in order to make the average diameter of the glass fiber or wool less than 3 µm, a flow of fire flames having remarkably high temperature is necessary, so as to remarkably increase the fuel cost. Since the present invention does not use glass fibers having such small diameter, the fuel cost can be prevented from increasing.

According to the present invention, the length of the fibers or wools is 10mm or more. Thus, the fibers or wools are sufficiently interlaced with one another, to provide the molded product with an improved shape-retaining effect and a strength that is satisfactorily high for handling. Additionally, since the fibers or wools are sufficiently interlaced with one another, the molded product shows a low thermal conductivity. If the fiber length is too small, an amount of dust of glass fibers is increased. The present invention prevents the amount of the dust from being increased.

According to the invention, the length is 200mm or less. Since the short glass fibers (glass wools) are not too long, the number of fibers (glass wools) per unit volume is not decreased. In other words, sufficient glass fibers or wools are included in molded product. Therefore, the molded product shows a uniform density distribution of glass fibers (wools), so as to show a low thermal conductivity.

Since the fibers or wools of the present invention have the average diameter and the length as described above, the short glass fibers or glass wools are highly resilient, and the dust generating ratio is low. According to the prior molded product, the dust generating ratio is 0.9 to 1.7wt% in the repetitive compression test. According to the present invention, the ratio is reduced to 1/1.5 to 1/3 in value.

Still additionally, no binder is used for the molded product in the present invention. Therefore, unlike known glass wool molded products, the molded product does not give rise to any adverse effect of gasification of a binder, even if it is used in a hot and/or vacuum atmosphere.

Preferably, the molded product has a multilayer structure in a direction orthogonal to the longitudinal direction of the wools, and the average diameter of the fibers or wools of the first layer and that of the second layer differ from each other. Due to the layer formed by fibers or wools having larger diameter, the surface of the molded product is smooth and hard, so that the molded product is highly handleable. The layer formed by fibers or wools having smaller diameter shows a low thermal conductivity. Thus, according to the present invention, it is possible to provide the molded product showing a low thermal conductivity and having the smooth and hard surface.

Preferably, the molded product has a multilayer structure in a direction orthogonal to the longitudinal direction of the fibers (wools) thereof, and the density of the first layer and that of the second layer differ from each other. The molded product shows the lowest thermal conductivity when the density is about 90kg/m³. On the other hand, the higher is the density, the harder is the molded product, so as to improve handleable and to show an excellent surface smoothness.

With the above described constructions, it is possible to provide the molded product having an excellent thermal conductivity and, at the same time, good surface characteristics (including a level of surface hardness good for handling and a favorable level of surface smoothness).

Preferably, a hardened layer of an inorganic type adhesive agent is formed on at least one of the surfaces of the molded product. Thus, the present invention provides the molded product having not only good thermal conductivity but also good surface smoothness and hardness. In addition, since the inorganic type adhesive agent is used, the molded product can withstand an operating environment where it is exposed to high temperature above 400° C.

Preferably, the density of the molded product is between 70kg/m³ and 110kg/m³. As described above, the molded product shows the lowest thermal conductivity when the density is about 90kg/m³. Therefore, when the density is found within the above range, it is possible to provide the molded product showing a low thermal conductivity.

The above described molded product can be easily manufactured only by adding a needle puncher to a known glass fiber forming unit.

### BRIEF DESCRIPTION OF THE DRAWINGS

FIG. 1 is a schematic illustration of the glass wool molded product of the first embodiment according to the present invention, showing how short glass fibers (glass wools) are interlaced by needle punching.
FIG. 2 is a schematic illustration of an apparatus for manufacturing a glass wool molded product according to the present invention (by means of a centrifugal method).
FIG. 3A is a schematic illustration of needle punching for forming the molded product of the first embodiment of FIG. 1.
FIG. 3B is an enlarged schematic lateral view of part of a needle to be used for needle punching.
FIG. 4 is a graph illustrating the relationship between the density and the thermal conductivity of a glass wool molded product.
FIG. 5 is a graph illustrating the relationship between the density and the thermal conductivity of the glass wool molded product formed by needle punching, and that of a glass wool molded product formed by using a binder (phenol resin) without a needle punch process.
FIG. 6 is a schematic longitudinal cross sectional view of part of the molded product of the second embodiment according to the present invention.
FIG. 7 is a schematic illustration of an apparatus for manufacturing the molded product of the second embodiment of FIG. 6.
FIG. 8 is a schematic longitudinal cross sectional view of the molded product of the third embodiment according to the present invention in a step of manufacturing the same.
FIG. 9 is a schematic longitudinal cross sectional view of the molded product of the third embodiment according to the present invention in another manufacturing method.
FIG. 10 is a schematic illustration of an apparatus for manufacturing the molded product of FIG. 9.
FIG. 11 is a schematic lateral view of the molded product of the fourth embodiment according to the invention.
FIG. 12 is a schematic lateral view of an apparatus for manufacturing the molded product of FIG. 11.

### DESCRIPTION OF THE PREFERRED EMBODIMENTS

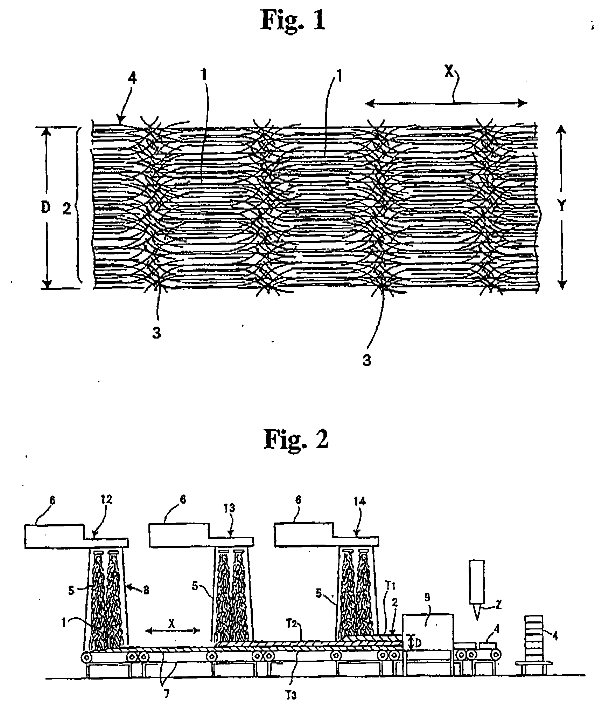

As shown in FIG. 1, a glass wool molded product 4 according to the invention comprises a layered body 2 of a large number of short glass fibers (glass wools) 1. While the molded product 4 illustrated in FIG. 1 comprises a single layered body 2, the glass wool molded product according to the invention may alternatively have a plurality of layered bodies to form a multilayer structure. The layered body 2 does not contain any binder. In other words, no binder is applied to the short glass fibers (glass wools) 1 that form the layered body 2. The layered body 2 is needle punched at 3 in a direction orthogonal to a longitudinal direction of the glass fibers or wools, which glass fibers 1 intertwine and are integrally molded to form a glass wool molded product 4. According to the present invention, an average diameter of the short glass fibers (glass wools) 1 is between 3 µm and 7 µm, and a length of each short glass fibers or glass wools 1 is between 10mm and 200mm.

As schematically illustrated in FIG. 2, the short glass fibers (glass wools) 1 are manufactured from glass by means of a known glass fiber forming unit 8. More specifically, molten glass is supplied from a glass melting furnace 6 to the glass fiber forming unit 8. The supplied molten glass is fibrillated by means of a flow of fire flames 5 having high temperature, to produce short glass fibers or glass wools 1. The temperature of the flow of fire flames 5, a glass viscosity and other related factors are adjusted in such a way that the average diameter of the short glass fibers or glass wools 1 becomes between 3 µm and 7 µm, and the length of each short glass fiber or glass wools 1 becomes between 10mm and 200mm.

The short glass fibers (glass wools) 1 are continuously collected on a fiber-collecting belt 7 to form a layered body 2. The layered body 2 is then fed to a needle puncher 9. The needle puncher 9 has a large number of needles 10. Each of the needles 10 is driven to move or reciprocate within a span equal to or longer than a thickness D of the layered body 2. The short glass fibers (glass wools) 1 are interlaced or interwound one another by the reciprocation of the needles 10, to form the glass wool molded product 4. A shape of the glass wool molded product 4 is retained without any binder.

A weight per unit area of the layered body 2 is, for example, 1.08kg/m², but the present invention is by no means limited thereto.

For example, ten (10) needles are driven into the layered body 2 per 1cm² for the purpose of the present invention. A processing speed (a moving speed of the belt 7) is, for example, 5m/min. It is possible to prepare the glass wool molded product having a density of 90kg/m³ under these conditions.

Subsequently, the molded product is cut to a desired length by means of a cutter Z.

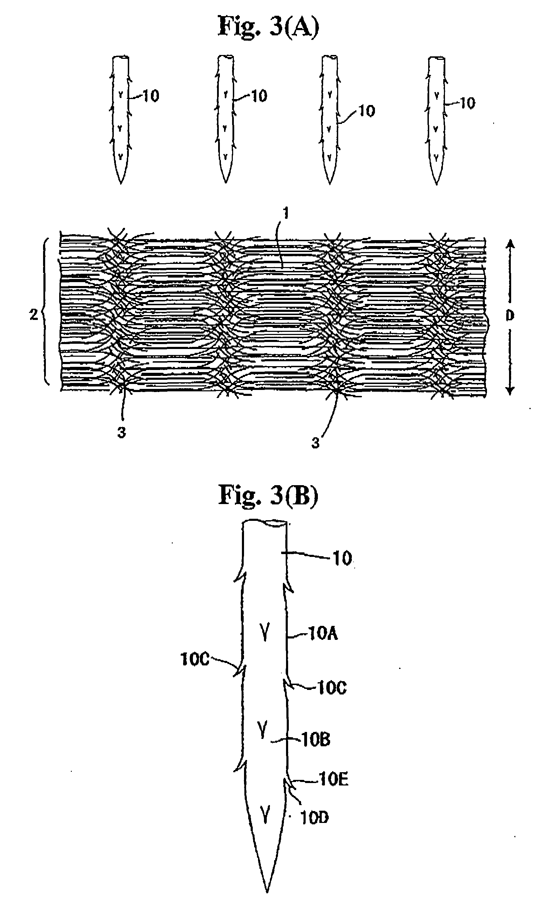

As shown in FIG. 3B, each of the needles 10 comprises a needle trunk 10A and a lot of thorns 10C. The thorns 10C are arranged over an entire outer peripheral surface 10B of the needle trunk 10A, and each of the thorns 10C shows a downwardly projecting sharp triangular beak-like profile. Each of the thorns 10C has a lower surface 10D and an upper surface 10E, which lower surface 10D and upper surface 10E are warped slightly upwardly. Thus, when the needle 10 moves downwardly, the lower surfaces 10D downwardly bend the short glass fibers or glass wools 1, whereas when the needle 10 moves upwardly, the upper surfaces 10D upwardly bend the short glass fibers or glass wools 1. Since each of the thorns 10C is made to show the downwardly projecting sharp triangular beak-like profile, the short glass fibers or glass wools 1 are bent to an extent that varies depending on a sliding effect between the fiber 1 and the thorn 10C. In other words, the fibers (wools) 1 are not bent uniformly. Under these circumstances, by the reciprocation of the needle 10, upwardly bent fibers (wools), downwardly bent fibers (wools) and non-bent fibers or wools (substantially straight) are included in the layered body 2, so that the fibers or wools are bound one another sufficiently.

A number of needles 10 driven or inserted into the layered body 2 per unit area by the needle puncher 9 is between 5 and 40 needles per cm², preferably between 5 and 20 needles per cm². When the number of needles 10 exceeds 40 per cm², a thermal conductivity of the molded product 40 becomes too high, although a density of the molded product 4 is raised. When the number of needles 10 is less than 5 per cm², the fibers or wools are poorly interlaced one another, so as to decrease a tensile strength of the molded product 4, and so as not to obtain a commercially feasible molded product 4. Additionally, the density of the molded product 4 becomes too small, while a thermal conductivity of the molded product 4 becomes too high.

The average diameter of the short glass fibers (glass wools) 1 is between 3 µm and 7 µm, and the length of each short glass fiber (glass wools) 1 is between 10mm and 200mm.

When the average diameter falls below 3 µm, the lengths of the short glass fibers (glass wools) 1 inevitably become small at the time of fiber forming, using a flow of fire flames 5. Thus, the fibers or wools 1 poorly interlaced one another by the needle punching, so that it is impossible to obtain a sufficient shape-retaining effect for the molded product 4. Additionally, the glass fibers or wools are directed in Y-direction by the needle punching, so as to consequently raise the thermal conductivity and to decrease an insulating effect of the molded product 4.

On the other hand, when the average diameter exceeds 7 µm, the short glass fibers (glass wools) I lose their resiliency. Thus, many of the fibers (wools) 1 will be broken during the needle punching. Also, the fibers (wools) 1 will poorly interlaced one another, so that it is impossible to obtain the molded product 4 that shows the required shape-retaining effect. Additionally a large amount of dust of broken glass fibers will be produced.

When the length of each short glass fiber (glass wools) 1 is less than 10mm, the fibers or wools will poorly interlaced one another, so that it is impossible to obtain the molded product 4 that shows a commercially feasible shape-retaining effect. On the other hand, the length exceeds 200mm, a number of short glass fibers (glass wools) per unit volume is reduced, to by turn reduce the quantity of short glass fibers (glass wools) per unit volume. Thus, the density distribution of glass fibers or wools will become not uniform, and the thermal conductivity will rise up high in the molding product 4.

Normally, a dust generating ratio of ordinary short glass fibers in a repetitive compression test is between 0.9 and 1.7wt%. On the other hand, the dust generating ratio of "excellent" short glass fibers (glass wools) is 1/1.5 to 1/3 of the above cited level. Short glass fibers (glass wools) having the average diameter between 3 and 7 µ m and the lengths between 10 and 200mm exactly show the dust generating ratio of such excellent short glass fibers (glass wools), and hence fall in the category of "excellent" short glass fibers (glass wools).

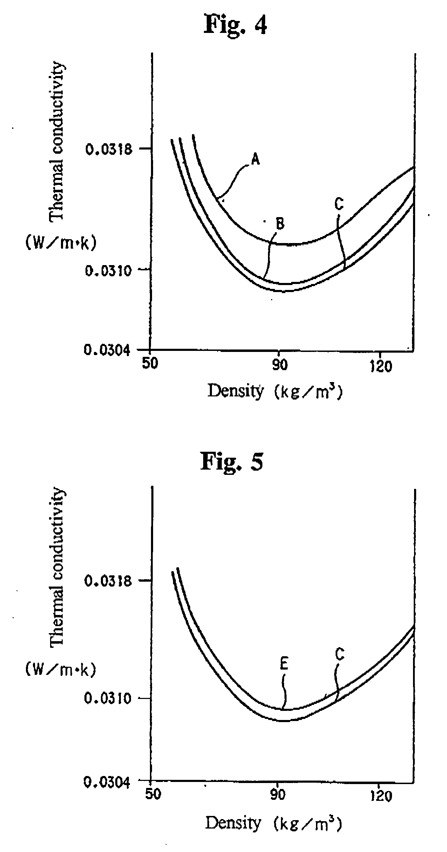

FIG. 4 is a graph illustrating the relationship between the density (kg/cm³) and the thermal conductivity (W/m·k) of glass wool molded products 4 with different average diameters having a configuration as illustrated in FIG. 1.

In FIG. 4, the curve A represents a glass wool molded product of short glass fibers (glass wools) having an average diameter of 8.5 µm. The curve B represents a glass wool molded product of short glass fibers (glass wools) having an average diameter of 2.5 µm. The curve C represents a glass wool molded product of short glass fibers (glass wools) having an average diameter of 5.5 µm. Each of these curves shows the relationship between the density of the molded product and the thermal conductivity.

As seen from FIG. 4, the molded product of the fibers or wools having the average diameter of 2.5 µm as represented by the curve B shows a low thermal conductivity than that having the average diameter of 5.5 µ m as represented by the curve C. The reason for this is that when the average diameter is less than 3 µ m, the length becomes short, and such short glass fibers (glass wools) interlaced one another only poorly, as pointed out above. Additionally, by the needle punching, such fibers tend to be directed in the Y-direction, or in the direction in which the needles are drive to move, so as to raise the thermal conductivity.

On the other hand, the molded product of short glass fibers (glass wools) having the average diameter of 8.5 µ m as represented by the curve A shows a very high thermal conductivity.

In FIG. 5, curve C shows the relationship between the density and the thermal conductivity of the molded product 4 according to the invention (formed by needle punching the layered body of short glass fibers or glass wools with the average diameter of 5.5 µm without using any binder) (same as the curve C of FIG. 4). Curve E shows the relationship between the density and the thermal conductivity of a molded product formed by bonding short glass fibers (glass wools) with an average diameter of 5.5µm by means of phenol resin (showing a shape same as the glass wool molded product of the curve C but not subjected to needle punching).

As seen from FIG. 5, in spite of the same average diameter, the molded product 4 (the curve C) obtained by needle punching shows the thermal conductivity lower than that (the curve E) obtained by using the binder. It may be same to assume that the reason for this is that the volume of the fibers or wools of the molded product obtained by needle punching is increased by the volume of the binder adhered to the fibers, so that the thermal conductivity is lowered so much.

The second embodiment of the molded product of short glass fibers (glass wools) according to the present invention has a multilayer structure where layers are laid one on the other in the Y-dxrection that is orthogonal to the longitudinal direction X of the fibers or wools. The average diameter of the fibers or wools of the first layer differs from that of the second layer. However, the present invention is by no means limited to two-layered multilayer structure. Additionally, the average diameter of the first layer may be same with that of the third layer.

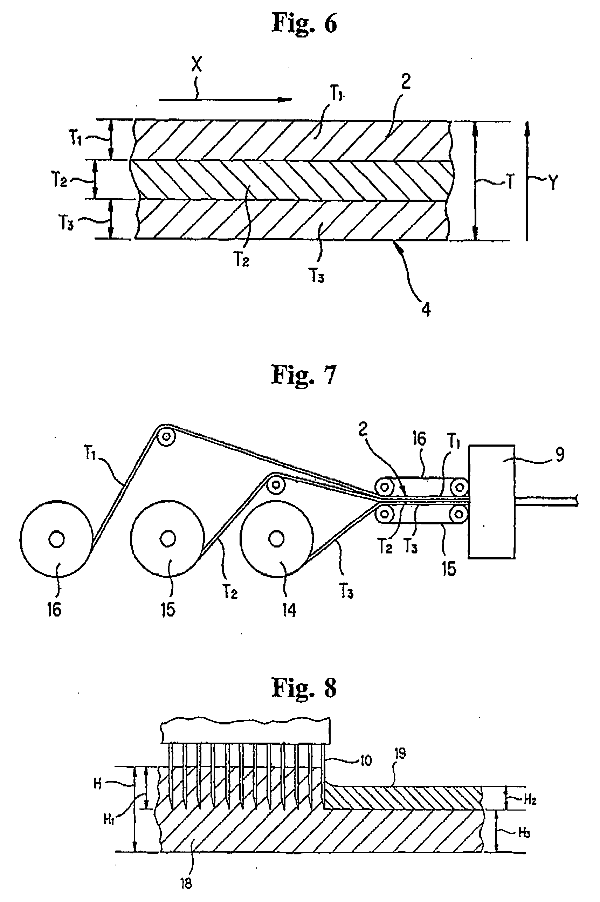

FIG. 6 is a schematic longitudinal cross sectional view of part of the second embodiment of the molded product, where the molded product 4 has a thickness T, and has three layers T₁, T₂, T₃ arranged in the Y-direction that is orthogonal to the longitudinal direction X of the fibers or wools. In the molded product 4 illustrated in FIG. 6, each the average diameters of the fibers or wools of the layer T₁ and the layer T₃ is 6.5 µ m, whereas the average diameter of the layer T₂ is 4.5 µm. The overall fiber density of the molded product is 90kg/m³, the weight of fibers or wools per unit area is 1.08kg/m², and the thickness T of the molded product is 12mm, although the present invention is by no means limited to these numerical values. The thermal conductivity of the molded product illustrated in FIG. 6 does not significantly differ from that (the curve C in FIG. 4) of the molded product 4 illustrated in FIG. 1. However, a surface smoothness and a surface hardness of the molded product of FIG. 6 are improved from those of the molded product 4 of FIG. 1.

The molded product of the second embodiment illustrated in FIG. 6 can be manufactured by using three glass fiber fornning unit 8 as shown in FIG. 2. Firstly, a large number of short glass fibers (glass wools) with an average diameter of 6.5 µ m are formed by a first glass fiber forming unit 12, and then collected on the fiber-collecting belt 7 to form the layer T₃. Then, a large number of short glass fibers (glass wools) with an average diameter of 4.5 µ m are formed by a second glass fiber forming unit 13, and then collected to form the layer T₂ on the layer T₃ on the belt 7. Thereafter, a large number of short glass fibers (glass wools) with an average diameter of 6.5 µm are formed by a third glass fiber forming unit 14, and then collected to form the layer T₁ on the layer T₂ on the belt 7. Subsequently, the multilayer structure of the three layers T₁, T₂, T₃ is needle punched by means of the needle puncher 9, and cut to a predetermined size by a cutter Z, to produce the molded product 4. Note, however, that the number of layers of the moldded product is by no means limited to three, and the average diameters of fibers or wools are by no means limited to the above listed numerical values.

Alternatively, the molded product of the second embodiment may be manufactured by the method illustrated in FIG. 7. Referring to FIG. 7, glass wool mats for the above described layers T₁, T₂, T₃ are prepared respectively by independent glass fiber forming unit 8 as shown in FIG. 2, and wound around respective rollers to form respective rolls 14, 15, 16. Then, the glass wool mat of the layer T₃ is drawn out from the roller 14, and thereafter the glass wool mat of the layer T₂ is drawn out from the roller 15 and laid on the glass wool mat of the layer T₃. Subsequently, the glass wool mat of the layer T₁ is drawn out from the roller 16, and laid on the glass wool mat of the layer T₂, to form a multilayer structure, which multilayer structure is then needle punched.

As illustrated in FIG. 4, the glass wool molded product according to the invention shows the lowest thermal conductivity when the density is about 90kg/m³ The thermal conductivity rises when as density increases beyond 90kg/m³. The surface hardness and the surface smoothness of the molded product are improved as the density increases. Therefore, the molded product showing a low thermal conductivity, an excellent surface hardness and also an excellent surface smoothness is obtained by combining a glass wool mat (layered body) showing a density of about 90kg/m³ and a glass wool mat (layered body) showing a density that exceeds 90kg/m³.

According to the third embodiment of the present invention, the glass wool molded product has a multilayer structure where layers are laid one on the other in the Y-direction that is orthogonal to the longitudinal direction X of the short glass fibers (glass wools), where the density of the first layer is different from that of the second layer. However, the number of layers is by no means limited to two. The density of the first layer and that of the third layer may be equal to each other.

FIG. 8 is a schematic longitudinal cross sectional view of the molded product of the third embodiment and its manufacturing method. The molded product of the third embodiment comprises an upper layer section having a height of H₂ and a lower layer section having a height of H₃. Firstly, a layered body 18 (e.g., having a weight per unit area of 1.08kg/m² and a density of 90k/m³) with a height of H is prepared by the above described method. Then, only an upper layer section having a height of H₁ is needle punched by needles 10 until the needle punched section is compressed to show a height of H₂ and a density of 100kg/m³. On the other hand, the remaining lower layer section having the height of H₃ still shows the density of 90kg/m³. The lower layer section (having the height of H₃, the density of 90kg/m³) shows the smallest thermal conductivity, while the upper layer section (having the height of H₃) shows high density, so as to have a hard and smooth surface.

While the density of the layered body is differentiated by needle punching in the method of FIG. 8, a plurality of known glass fiber forming unit 8 as shown in FIG. 2 may alternatively be used to form a plurality of layers of short glass fibers (glass wools) having respective densities on a fiber-collecting belt 7, and subsequently the plurality of layers of short glass fibers (glass wools) may be integrated by needle punching. In this case, it is preferable that the layer showing the highest density is arranged on top of the multilayer structure.

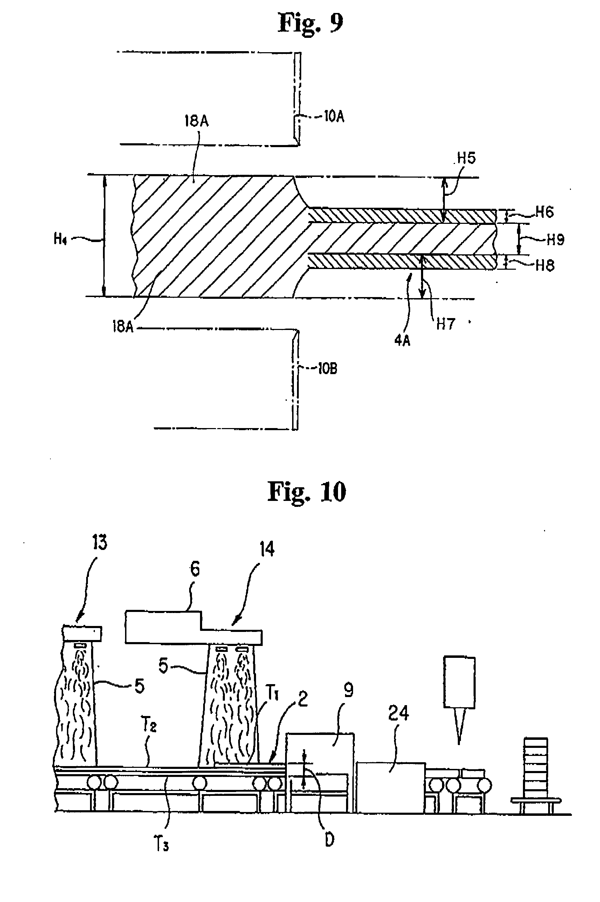

Still alternatively, the molded product of the third embodiment may be manufactured by the method described below. FIG. 9 schematically illustrates the manufacturing method and a layered body being manufactured. Firstly, a layered body 18A having a thickness of H₄ is prepared by the above described method. Then, a top part of the layered body 18A that has a thickness of H₅ is needle punched by needles 10A from above, and compressed to show a thickness of H₆, to produce an upper layer section. Additionally, a bottom part of the layered body 18A that has a thickness of H₇ is needle punched by needles 10B from below, and compressed to show a thickness of H₈, to produce a lower layer section. Since the upper and lower sections are compressed, each of the upper and lower sections has a density higher than that of the original layered body 18A. An intermediate portion having a thickness of H₉ of the layered body 18 is an intermediate layer, and is not needle punched. A density of the intermediate layer is same as that of the original layered body 18A. Since the upper layer section and the lower layer section show a large density, the molded product can retain its shape. Additionally, the needle punching of the upper and the lower layer sections may affect the intermediate layer section. In the examle illustrated in FIG. 9, the thickness (H₉) of the intermediate layer is preferably not larger than 40% of the overall height (H₆ + H₉ + H₈) of the entire moldded product.

The molded product 4A having a three-layered structure illustrated in FIG. 9 can be easily manufactured by needle punching only an upper layer section by the needles 10A (FIG. 9) of the needle puncher 9 from above, and by needle punching only a lower layer section by the needles 10B (FIG. 9) of a needle puncher 24 from below. In other words, an apparatus same as the one illustrated in FIG. 2 in terms of structure may be used for it except that a moving extent of the needles of the needle puncher 9 is altered and that another needle puncher 24 is added.

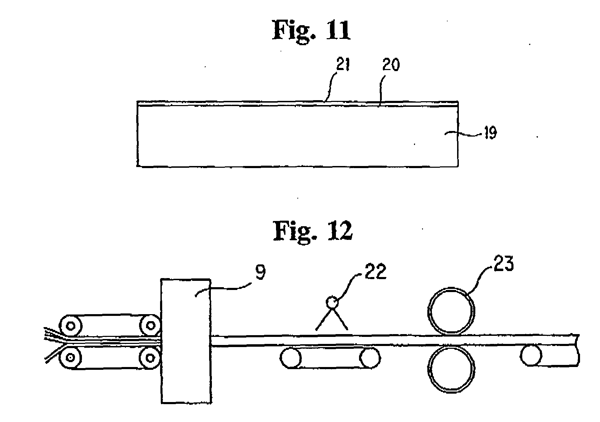

A. glass wool molded product normally is a hexahedron. A hardened layer may be formed by means of an inorganic adhesive agent on at least one of surfaces of the molded product. FIG. 11 illustrates such a molded product. In the example illustrated in FIG. 11, such hardened layer 21 of the adhesive agent is formed on a top surface 20 of the molded product 19. Since the hardened layer 21 is formed, the hardness and the smoothness of the top surface of the molded product are improved, to by turn make it more handleable in use and to improve the water-shielding effect and the dampproof of the product.

The adhesive agents that can be used for the purpose of the present invention include inorganic type adhesive agents such as aluminum phosphate, aluminum sulfamate and aluminum sulfate. The molded product according to the invention can be provided with heat resistance of withstanding high temperature above 400° C by using such an inorganic type adhesive agent.

For the purpose of the present invention, such adhesive agent is applied at a rate of 5 to 60g/m², preferably 5 to 30g/m².

When the rate is more than 60g/m², the manufacturing cost of the molded product will rise, and the thermal conductivity of the molded product will become too high. When the rate is less than 5g/m², the objective of improving the smoothness and the hardness of the surface is not achieved sufficiently.

The adhesive agent is applied to the layered body and set after the needle punching. In the method illustrated in FIG. 2, the adhesive agent is applied and set between the needle puncher 9 and the cutter Z. In the method illustrated in FIG. 7, an applying apparatus 22 (e.g., an adhesive agent injecting apparatus) and a drying/setting apparatus 23 are arranged immediately after the needle puncher 9 as shown in FIG. 12.

A sprayer, a roll coater or some other appropriate known means may be used for applying the above described adhesive agent.

An appropriate known means such as a hot roller or a hot plate may be used as the drying/setting apparatus. Preferably, such means can contact with the surface of the molded product 4 to press and /or heat the surface, because the surface of the molded product is hardened and smoothed.

The heating temperature for heating the adhesive agent is between 200° C and 550° C, preferably between 250° C and 500° C. When the temperature is lower than 200° C, the adhesive agent will be hardened imperfectly, and a rigid hardened layer will not be formed. Additionally, problems such as the one that the adhesive agent adheres to the hot roller or the hot plate being used for heating will arise. On the other hand, when the temperature is higher than 550° C, strength of adhesion will be reduced, and problems such as the one that the fibers and the adhesive agent become fragile.

Preferably, the above described molded product 4 has a density between 70 and 110kg/m³.

As illustrated in FIG. 4, the glass wool molded product 4 obtained by needle punching the layered body of short glass fibers (glass wools) shows the lowest thermal conductivity when its density is about 90kg/m³. When the density is higher than 90kg/m³, the surface smoothness, the surface hardness, the tensile strength and other heat resistant properties of the molded product are improved. Therefore, when the density is between 70 and 110kg/m³, it is possible to provide a glass wool molded product that meets the requirements imposed on it depending on a local environment, an operating environment and a budget of the glass wool molded product.

As described above, according to the present invention, it is possible to form a glass wool molded product by supplying a layered body of short glass fibers (glass wools) showing an average diameter between 3 µ m and 7 µ m, a length between 10mm and 200mm and not containing any binder, and then by needle punching the layered body in a direction orthogonal to a longitudinal direction of the fibers or wools. If the molded product has a hardened layer of an inorganic adhesive agent on at least one of surfaces thereof, an inorganic type adhesive agent is applied to at least one of the surfaces, and then the applied adhesive agent is heated and set. With such a method, it is possible to use a known glass fiber forming unit 8 with a wide scope of free choice to form the glass wool molded product.

## Claims

1. A glass wool molded product (4) comprising a layered body (2) of glass wools (1), **characterized in that**
the layered body (2) does not contain any binder,
the layered body (2) is needle punched in a direction (Y) orthogonal to a longitudinal direction (X) of the wools thereof, so that the layered body (2) is integrally formed,
the wools have an average diameter of 3 to 7 µm, and
each of the wools has a length between 10 and 200mm.

2. The glass wool molded product according to claim 1, wherein
the molded product (4) has a multilayer structure in the direction (Y) orthogonal to the longitudinal direction (X) of the wools, and the average diameter of the wools of a first layer and that of the wools of a second layer differ from each other.

3. The glass wool molded product according to claim 1, wherein the molded product (4) has a multilayer structure in the direction (Y) orthogonal to the longitudinal direction (X) of the wools, and a density of a first layer and that of a second layer differ from each other.

4. The glass wool molded product according to any one of claims 1 through 3, wherein the molded product (4) is a hexahedron, and a hardened layer (21) of an inorganic type adhesive agent is formed on at least one of surfaces of the molded product (4).

5. The glass wool molded product according to any one of claims 1 through **4,** wherein a density of the molded product (4) is between 70kg/m³ and 110kg/m³.

6. A method of molding a glass wool molded product, comprising:
supplying a layered body (2) of glass wools (1) having an average diameter of 3 to 7 µm and a length between 10 and 200mm, said layered body (2) including no binder,
needle punching the layered body (2) in a direction orthogonal (Y) to a longitudinal direction (X) of the wools, to molding the molded product (4),
applying an inorganic type adhesive agent to at least one of surfaces of the molded product, and
heat-setting the applied inorganic type adhesive agent.
